# EUROPEAN PATENT APPLICATION

(11) **EP 3 416 149 A1**
(43) Date of publication of application: **19.12.2018**
(21) Application number: 18172643.1
(22) Date of filing: 16.05.2018
(51) Int. Cl.: G08B 29/18, G08B 3/00

(54) **SYSTEM AND METHOD FOR TESTING A SECURITY SYSTEM**

(30) Priority: 14.06.2017 US 201715622781
(71) Applicant: Honeywell International Inc., Morris Plains, NJ New Jersey 07950 (US)
(72) Inventor: BABICH, Thomas, Morris Plains, NJ 07950 (US)
(74) Representative: Houghton, Mark Phillip

(57) **Abstract**

System and method for testing a connected system (100) can include a user interface device (112) receiving first user input, the connected system entering a test mode responsive to the first user input, the user interface device receiving second user input while in the test mode, the connected system tripping a zone of a region (R) in which the connected system is installed to test the connected system responsive to the second user input, the connected system identifying an audible transducer (120) of the connected system associated with tripping the zone, and the connected system transmitting a first activation signal to the audible transducer. In some embodiments, the first activation signal can include first instructions for the audible transducer to emit sound at a first level that is different than a second level at which the audible transducer emits the sound when the connected system is out of the test mode.

## Description

### FIELD

The present invention relates generally to security systems. More particularly, the present invention relates to systems and methods for testing a security system.

### BACKGROUND

After the equipment of a security system is installed and is fully functional, the security system must be tested by arming the security system and tripping each zone in a region monitored by the security system. This can be a chaotic experience of audible transducers being activated for several minutes, thereby causing a poor user experience with people covering their ears and animals becoming agitated.

To improve the user experience during testing, it is known to physically disable audible transducers in a security system by removing connections to the audible transducers or entering a program mode to temporarily quiet the audible transducers. However, such actions take time to complete and must be manually undone when the testing is complete. If the actions are not undone after the testing is complete, then the security system will not function properly, thereby allowing the monitored region to be susceptible to attack. Furthermore, once a user notices that the security system is not functioning properly after the testing is complete, a local or remote technician will be required to service the security system.

In view of the above, there is a continuing, ongoing need for improved systems and methods.

### BRIEF DESCRIPTION OF THE DRAWINGS

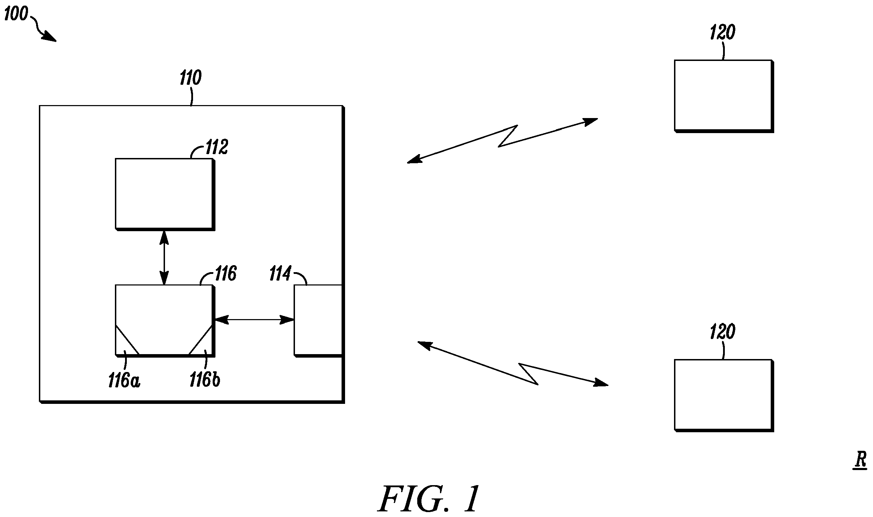

FIG. 1 is a block diagram of a system in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for testing a security system. In some embodiments, a security system can include an arm mode, a disarm mode, and a test mode, and in some embodiments, the test mode can include all features of the arm mode except for the level at which audible transducers in the security system emit sound. For example, when the security system is in the arm mode or the disarm mode, the audible transducers in the security system can be activated to emit sound at a first, normal level. However, when the security system is in the test mode, the audible transducers in the security system can be activated to emit sound at a second, reduced level that is lower than the first, normal level. In some embodiments, the second, reduced level can be silent, quiet, muffled, or barely audible.

Systems and methods disclosed herein are described in connection with security systems. However, it is to be understood that systems and methods disclosed herein are not so limited and could be used in connection with a fire alarm system or any connected home system with internet of things (loT) devices.

In some embodiments, the audible transducers of the security system disclosed and described herein can include, but are not limited to audible transducers that are a part of control panel sirens, keypads, wired or wireless fire, smoke, or carbon monoxide detectors, and remote sirens. However, audible transducers as disclosed and described herein are not so limited and could include any portion of a security system that emits sound and as would be known by one of ordinary skill in the art.

In accordance with disclosed embodiments, after the equipment of the security system is installed is fully functional, the security system can be tested by receiving first user input to place the security system in the test mode and receiving second user input to trip a zone in a region monitored by the security system. For example, in some embodiments, the first user input can include a first code for an installer of the security system that is different than a second code that places the security system in the arm mode. When a respective zone is tripped, one or more audible transducers that are activated by the respective zone being tripped can emit sound at the second, reduced level rather at the first, normal level.

When the security system is in the test mode, a user can run a plurality of tests on the security system, for example, providing respective second user input to trip each of a plurality of zones in the region monitored by the security system. When testing is complete, the security system can exit the test mode by receiving third user input to exit the test mode, for example, by placing the security system in the arm mode or in the disarm mode. In some embodiments, the third user input can include the first code for the installer of the security system. After exiting the test mode, whenever the audible transducers in the security system are activated, the audible transducers can emit sound at the first, normal level and, in some embodiments, do not require manual intervention or additional user input other than the third user input to do so.

FIG. 1 is a block diagram of a system 100 in accordance with disclosed embodiments. As seen in FIG. 1, the system 100 can include a security system control panel device 110 in wired or wireless communication with a plurality of audible transducers 120 in a region R being monitored by the system 100. The security system control panel device 110 can include a user interface device 112 and a transceiver device 114 in communication with control circuitry 116, one or more programmable processors 116a, and executable control software 116b as would be understood by one of ordinary skill in the art. The executable control software can be stored on a transitory or non-transitory computer readable medium, including but not limited to local computer memory, RAM, optical storage media, magnetic storage media, flash memory, and the like.

In some embodiments, the user interface device 112 can receive first user input to place the control circuitry 116, the programmable processors 116a, and the executable control software 116b in a test mode. Then, the user interface device 112 can receive second user input to trip a zone in the region R. When a respective zone is tripped, the control circuitry 116, the programmable processors 116a, and the executable control software 116b can transmit an activation signal via the transceiver device 114 to one or more of the plurality of audible transducers 120 that are associated with the respective zone being tripped. The activation signal can include instructions for the one or more of the plurality of audible transducers 120 to emit sound at a second, reduced level that is different than a first, normal level at which the plurality of audible transducers 120 emit sound outside of the test mode.

In some embodiments, the user interface device 112 can receive third user input to remove the control circuitry 116, the programmable processors 116a, and the executable control software 116b from the test mode. Responsive to the third user input and exiting the test mode, whenever any of the plurality of audible transducers 120 are activated, the activated ones of the plurality of audible transducers can emit sound at the first, normal level.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   a user interface device of a connected system receiving first user input;
   responsive to the first user input, the connected system entering a test mode;
   while in the test mode, the user interface device receiving second user input;
   responsive to the second user input, the connected system tripping a zone of a region in which the connected system is installed to test the connected system;
   the connected system identifying an audible transducer of the connected system associated with tripping the zone; and
   the connected system transmitting a first activation signal to the audible transducer,
   wherein the first activation signal includes first instructions for the audible transducer to emit sound at a first level that is different than a second level at which the audible transducer emits the sound when the connected system is out of the test mode.
2. The method of 1 wherein the connected system is a fire alarm system or a security system.
3. The method of 1 wherein the connected system includes a plurality of loT devices.
4. The method of 1 wherein the test mode is equivalent to an arm mode of the connected system except for the first level at which the audible transducer emits the sound.
5. The method of 4 further comprising:
   when in the arm mode, the connected system transmitting a second activation signal to the audible transducer whenever the zone is tripped,
   wherein the second activation signal includes second instructions for the audible transducer to emit the sound at the second level.
6. The method of 4 wherein the first user input includes a first code, and wherein the first code is different than a second code that places the connected system in the arm mode.
7. The method of 1 wherein the second level is lower than the first level.
8. The method of 1 further comprising:
   the user interface device receiving third user input;
   responsive to the third user input, the connected system exiting the test mode; and
   after exiting the test mode, the connected system transmitting a second activation to the audible transducer whenever the zone is tripped,
   wherein the second activation signal includes second instructions for the audible transducer to emit the sound at the second level.
9. The method of 8 wherein the connected system exiting the test mode includes the connected system entering an arm mode or a disarm mode.
10. The method of 8 wherein the third user input is equivalent to the first user input.
11. A system comprising:
   a user interface device;
   a transceiver device;
   a programmable processor; and
   executable control software stored on a non-transitory computer readable medium,
   wherein the user interface device receives first user input,
   wherein, responsive to the first user input, the programmable processor and the executable control software enter a test mode,
   wherein, while in the test mode, the user interface device receives second user input,
   wherein, responsive to the second user input, the programmable processor and the executable control software transmit a test signal via the transceiver device to trip a zone of a monitored region,
   wherein the programmable processor and the executable control software identify an audible transducer associated with tripping the zone,
   wherein the programmable processor and the executable control software transmit a first activation signal via the transceiver device to the audible transducer, and
   wherein the first activation signal includes first instructions for the audible transducer to emit sound at a first level that is different than a second level at which the audible transducer emits the sound when the programmable processor and the executable control software are out of the test mode.
12. The system of 11 wherein the audible transducer is part of a fire alarm system or a security system.
13. The system of 11 wherein the audible transducer is part of a connected system that includes a plurality of loT devices.
14. The system of 11 wherein the test mode is equivalent to an arm mode of the programmable processor and the executable control software except for the first level at which the audible transducer emits the sound.
15. The system of 14 wherein, when in the arm mode, the programmable processor and the executable control software transmit a second activation signal via the transceiver device to the audible transducer whenever the zone is tripped, and wherein the second activation signal includes second instructions for the audible transducer to emit the sound at the second level.
16. The system of 14 wherein the first user input includes a first code, and wherein the first code is different than a second code that places the programmable processor and the executable control software in the arm mode.
17. The system of 11 wherein the second level is lower than the first level.
18. The system of 11 wherein the user interface devices receives third user input, wherein, responsive to the third user input, the programmable processor and the executable control software exit the test mode, wherein, after exiting the test mode, the programmable processor and the executable control software transmit a second activation signal via the transceiver device to the audible transducer whenever the zone is tripped, and wherein the second activation signal includes second instructions for the audible transducer to emit the sound at the second level.
19. The system of 18 wherein the programmable processor and the executable control software exiting the test mode includes the programmable processor and the executable control software entering an arm mode or a disarm mode.
20. The system of 18 wherein the third user input is equivalent to the first user input.

## Claims

1. A method comprising:
a user interface device of a connected system receiving first user input;
responsive to the first user input, the connected system entering a test mode;
while in the test mode, the user interface device receiving second user input;
responsive to the second user input, the connected system tripping a zone of a region in which the connected system is installed to test the connected system;
the connected system identifying an audible transducer of the connected system associated with tripping the zone; and
the connected system transmitting a first activation signal to the audible transducer,
wherein the first activation signal includes first instructions for the audible transducer to emit sound at a first level that is different than a second level at which the audible transducer emits the sound when the connected system is out of the test mode.

2. The method of claim 1 wherein the connected system is a fire alarm system or a security system.

3. The method of claim 1 wherein the connected system includes a plurality of loT devices.

4. The method of claim 1 wherein the test mode is equivalent to an arm mode of the connected system except for the first level at which the audible transducer emits the sound.

5. The method of claim 4 further comprising:
when in the arm mode, the connected system transmitting a second activation signal to the audible transducer whenever the zone is tripped,
wherein the second activation signal includes second instructions for the audible transducer to emit the sound at the second level.

6. The method of claim 4 wherein the first user input includes a first code, and wherein the first code is different than a second code that places the connected system in the arm mode.

7. The method of claim 1 wherein the second level is lower than the first level.

8. The method of claim 1 further comprising:
the user interface device receiving third user input;
responsive to the third user input, the connected system exiting the test mode; and
after exiting the test mode, the connected system transmitting a second activation to the audible transducer whenever the zone is tripped,
wherein the second activation signal includes second instructions for the audible transducer to emit the sound at the second level.

9. The method of claim 8 wherein the connected system exiting the test mode includes the connected system entering an arm mode or a disarm mode.

10. The method of claim 8 wherein the third user input is equivalent to the first user input.

11. A system comprising:
a user interface device;
a transceiver device;
a programmable processor; and
executable control software stored on a non-transitory computer readable medium,
wherein the user interface device receives first user input, wherein, responsive to the first user input, the programmable processor and the executable control software enter a test mode,
wherein, while in the test mode, the user interface device receives second user input,
wherein, responsive to the second user input, the programmable processor and the executable control software transmit a test signal via the transceiver device to trip a zone of a monitored region,
wherein the programmable processor and the executable control software identify an audible transducer associated with tripping the zone,
wherein the programmable processor and the executable control software transmit a first activation signal via the transceiver device to the audible transducer, and
wherein the first activation signal includes first instructions for the audible transducer to emit sound at a first level that is different than a second level at which the audible transducer emits the sound when the programmable processor and the executable control software are out of the test mode.

12. The system of claim 11 wherein the audible transducer is part of a fire alarm system or a security system.

13. The system of claim 11 wherein the audible transducer is part of a connected system that includes a plurality of loT devices.

14. The system of claim 11 wherein the test mode is equivalent to an arm mode of the programmable processor and the executable control software except for the first level at which the audible transducer emits the sound.

15. The system of claim 14 wherein, when in the arm mode, the programmable processor and the executable control software transmit a second activation signal via the transceiver device to the audible transducer whenever the zone is tripped, and wherein the second activation signal includes second instructions for the audible transducer to emit the sound at the second level.
